# EUROPÄISCHE PATENTANMELDUNG

(11) **EP 4 483 836 A1**
(43) Veröffentlichungstag der Anmeldung: **01.01.2025**
(21) Anmeldenummer: 23181575.4
(22) Anmeldetag: 26.06.2023
(51) Int. Cl.: A61C 9/00, A61C 8/00, A61C 13/00, A61C 13/34

(54) **DENTALANALOG**

(71) Anmelder: Steger, Heinrich, 39032 Sand in Taufers (IT)
(72) Erfinder: Steger, Heinrich, 39032 Sand in Taufers (IT)
(74) Vertreter: Schwarz & Partner Patentanwälte GmbH

(57) **Zusammenfassung**

Dentalanalog (1) umfassend einen Einbauabschnitt (2) und einen dem Einbauabschnitt (2) gegenüberliegenden Interfaceabschnitt (3), wobei der Einbauabschnitt (2) einen Endabschnitt (12) zum Einführen des Dentalanalogs in eine Ausnehmung eines 3D-Modells aufweist, wobei der Einbauabschnitt (2) einen Arretierabschnitt (4) mit Spreizelementen (5) aufweist, wobei ein Arretierelement (7, 7') vorgesehen ist, mit welchem die Spreizelemente (5) aus dem Arretierabschnitt (4) ausschwenkbar und in den Arretierabschnitt (4) einschwenkbar sind.

## Beschreibung

Die vorliegende Erfindung betrifft ein Dentalanalog umfassend einen Einbauabschnitt und einen dem Einbauabschnitt gegenüberliegenden Interfaceabschnitt, wobei der Einbauabschnitt einen vorzugsweise im Wesentlichen zylinderförmig oder konisch ausgebildeten Bereich für den Einsatz in ein 3D-Modell aufweist. Weiters betrifft die Erfindung ein Verfahren zur Herstellung von Zahnersatz. Schließlich betrifft die Erfindung die Verwendung von Dentalanalogen in einem 3D-Modell, insbesondere einem 3D-Gussmodell, 3D-Fräsmodel oder einem 3D-Druckmodell eines Gebisses.

### HINTERGRUND DER ERFINDUNG

Für die Versorgung von Patienten mit Zahnersatz ist eine sorgfältige Planung des gesamten Ablaufs von der Insertion eines Zahnimplantats in den Kieferknochen bis hin zum Design und Einsatz der fertigen künstlichen Zahnkrone erforderlich. Neben dem Einsetzen des Zahnimplantats in den Kiefer und der Osseointegration ist die exakte Fertigung der Zahnkrone der entscheidende Schritt für ein erfolgreiches Resultat.

Bei der Fertigung und Modellierung der Zahnkrone kommen 3D-Modelle des Gebisses zum Einsatz, mit welchen die tatsächliche Situation im Mund nachgestellt wird. Nach Stand der Technik werden die 3D-Modelle mittels Abdrucks und Modellguss oder mittels Scans und 3D Drucks oder spanender Fertigung angefertigt. An der zu versorgenden Stelle im echten Gebiss wird im 3D-Modell ein sogenanntes Dentalanalog eingesetzt. Das Dentalanalog wird gelegentlich auch als Scananalog, Druckanalog, Analog oder Implantatanalog bezeichnet. Es stellt ein Hilfsmittel bei der Modellierung des Zahnersatzes dar und übernimmt im 3D-Modell stellvertretend die Funktion des Implantantkörpers im Gebiss. Damit kann eine kongruente Situation des echten Gebisses am 3D-Modell hergestellt werden, da das Dentalanalog den Implantatkörper simuliert.

Für die Modellierung und Anpassung der Prothese ist eine exakte Positionierung des Dentalanalogs im 3D-Modell von größter Wichtigkeit.

Nach Stand der Technik wird das der Einbauabschnitt des Dentalanalog von oben in eine Öffnung im 3D-Modell des Kiefers eingeschoben und von der Rückseite oder im rechten Winkel zur Einschubachse über eine Halteschraube am 3D-Modell befestigt. Diese Vorgehensweise hat zwei Nachteile. Einerseits ist das Handling des Einsetzens und Positionierens des Dentalanalogs in das 3D-Modell aufwändig. Zudem ist eine exakte Positionierung nur schwer möglich.

Es gibt Ansätze den letztgenannten Nachteil über passgleiche Flächen zwischen Dentalanalog und 3D-Modell (z.B. Flachstellen, Zapfen und Nut) auszugleichen, allerdings ist dies insbesondere bei nach 3D-Druck hergestellten 3D-Modellen nicht ausreichend. 3D-Druck ist bekannt für seinen Präzisionsmangel bzw. geringe Genauigkeit. Daher tritt bei den Dentalanalogen nach Stand der Technik im montierten Zustand immer ein Axial- und Rotationsspiel zwischen Dentalanalog und 3D-Modell auf. Auch wenn das Dentalanalog durch die Fixierschraube von unten befestigt ist, kann es bei der Montage der Dentalprothese im vorhandenen Spiel bewegt und verschoben werden. Die Baugruppe 3D-Modell und Dentalanalog werden durch Kraftweinwirkung verändert und korrelieren nicht mehr mit der effektiven Situation im Mund. Dies führt naturgemäß beim Finalisieren der Zahn-Restauration für die Restauration im Mund zu Problemen.

Ein alternatives Dentalanalog wird in EP 2 416 728 A1 beschrieben, das keinen zweiteiligen Einbauabschnitt sondern einen Einbauabschnitt mit einem selbstschneidendenden Außengewinde beschreibt, das in das 3D-Modell eingeschraubt und so befestigt wird. Das Dentalanalog von EP 2 416 728 A1 hat eine vorgegebene Einbautiefe, die über das Außengewinde definiert ist. Außerdem führt die Krafteinwirkung auf das Dentalanalog bei der Modellierung des Zahnersatzes gelegentlich zur Lockerung im 3D-Modell.

### KURZBESCHREIBUNG DER ERFINDUNG

Aufgabe der vorliegenden Erfindung ist die Bereitstellung eines Dentalanalogs, bei dem die genannten Nachteile vermindert sind. Insbesondere soll das Einsetzen des Dentalanalogs in das 3D-Modell vereinfacht werden und es soll die Positionierung des Dentalanalogs im 3D-Modell verbessert werden.

Gelöst wird diese Aufgabe durch ein

Dentalanalog, umfassend
einen Einbauabschnitt und einen dem Einbauabschnitt gegenüberliegenden Interfaceab schnitt,
wobei der Einbauabschnitt einen Endabschnitt zum Einführen des Dentalanalogs in eine Ausnehmung eines 3D-Modells aufweist,
dadurch gekennzeichnet, dass
der Einbauabschnitt einen Arretierabschnitt mit Spreizelementen aufweist,
wobei ein Arretierelement vorgesehen ist, mit welchem die Spreizelemente aus dem Arretierabschnitt ausschwenkbar und in den Arretierabschnitt einschwenkbar sind.

Ein Dentalanalog repliziert am 3D-Modell die genaue Positionierung und Verbindung zwischen Zahnersatz und Implantat im Gebiss. Dazu wird der Einbauabschnitt des Dentalanalogs in eine Ausnehmung im 3D-Modell des Gebisses eingesetzt. Die Ausnehmung im 3D-Modell ist meist als Bohrung ausgeführt. Daher ist der Einbauabschnitt zumindest bereichsweise vorzugsweise im Wesentlichen zylinderförmig ausgebildet, um die Einfuhr des Dentalanalogs in die Ausnehmung zu erleichtern und die Führung des Dentalanalogs entlang der Einschubachse zu gewährleisten. Der Einbauabschnitt muss allerdings nicht über den gesamten Bereich zylinderförmig ausgebildet sein. Er kann z.B. mehrere zylinderförmige Bereiche und/oder andersförmig ausgebildete Bereiche aufweisen. Idealerweise ist allerdings im Bereich des größten Durchmessers des Einbauabschnittes ein zylinderförmiger (vorzugsweise kreiszylinderförmiger) Bereich vorgesehen. Dieser stabilisiert das Dentalanalog entlang der Einschubachse in der Ausnehmung.

Der Einbauabschnitt kann im Bereich des Endes bereichsweise konisch ausgebildet sein, um eine vereinfachte Einfuhr zu ermöglichen.

Über das Arretierelement und den Arretierabschnitt kann der Einbauabschnitt mit dem 3D-Modell stabil verbunden werden, indem die Spreizelemente aus dem Arretierabschnitt ausgefahren werden. Dies hat den Vorteil, dass sich der Einbauabschnitt optimal positionieren und automatisch zentrieren lässt. Der Einbauabschnitt bietet damit maximale Stabilität im Einbauzustand im 3D-Modell. Der Arretierabschnitt selbst kann wiederum zylinderförmig ausgebildet sein.

In einer Ausführungsvariante ist das Arretierelement in axialer Richtung des Dentalanalogs von der Seite des Interfaceabschnitts betätigbar. Dadurch ist ein Einbau möglich, ohne dass ein Handling von der Unterseite des 3D-Modells erforderlich ist. In einer Ausführungsvariante kann das Arretierelement in axialer Richtung von der Seite betätigbar sein, die dem Interfaceabschnitt gegenüberliegt, was bei den vorderen Zähnen im Gebiss vorteilhaft ist. In einer bevorzugten Ausführungsvariante ist das Arretierelement von beiden Seiten zugänglich - gegebenenfalls können auch zwei oder mehr Arretierelemente vorgesehen sein.

Das Arretierelement kann einen Schraubabschnitt umfassen und der Einbauabschnitt kann einen dem Schraubabschnitt entsprechenden Gewindeabschnitt umfassen. Weiters kann das Arretierelement in axialer Richtung des Dentalanalogs relativ zum Arretierabschnitt bewegbar sein. Dadurch kann z.B. über eine konusförmige Kontur des Arretierelements Kraft auf die Spreizelemente ausgeübt werden, die derart vom Arretierabschnitt ausschenkbar sind. Die Spreizelemente können also entlang der Längsachse des Einbauabschnitts radial ausschwenkbar ausgebildet sein.

Der Schraubabschnitt und der entsprechende Gewindeabschnitt können eine Spannschraube umfassen, mit der auf die Spreizelemente eine Kraft ausgeübt werden kann. Die Spannschraube kann von einer oder beiden Seiten des Einbauabschnitts zugänglich gemacht sein.

Die Spreizelemente können beispielsweise entlang der Längsachse des Einbauabschnitts radial ausschwenkbar sein. Dies ermöglicht die ideale Verspreizung und eine lösbare Verbindung zwischen 3D-Modell und Einbauabschnitt. Die lösbare Verbindung kann kraftschlüssig und/oder formschlüssig ausgebildet sein. Bei weichen 3D-Modellen ist eine formschlüssige Verbindung bevorzugt. Der Einbauabschnitt ist damit in radialer Richtung auch bei ungenaueren 3D-Modellen unbeweglich. Die Spreizelemente können Klauen umfassen.

Bevorzugt bilden die Spreizelemente im ausgeschwenkten Zustand etwa die Form eines Kegelstumpfs, wobei die Deckfläche des Kegelstumpfs näher zum freistehenden Abschnitt als Grundfläche des Kegelstumpfs angeordnet ist. Dadurch ist ein Verrutschen entlang der Längsachse praktisch ausgeschlossen.

Zur leichteren Orientierung und um Verwechslungen zu vermeiden, können die Dentalanaloge Kodierungen aufweisen. Beispielsweise können die Dentalanalogen durch unterschiedlich voreingefärbt sein. So kann für unterschiedliche Hersteller, unterschiedliche Abutments oder unterschiedliche Zahnarten eine Farbkodierung vorgesehen sein.

Außerdem kann der Einbauabschnitt eine Führungshilfe aufweisen, sodass eine korrekte Platzierung im 3D-Modell gewährleistet ist. Beispielsweise kann hierfür ein Index vorgesehen sein. Vorzugsweise ist im Bereich der Spreizelemente zwischen zwei Spreizelementen eine Führungshilfe als Index vorgesehen, welches vorsteht. Die Führungshilfe kann mit einem im 3D-Modell korrespondierenden Abschnitt (z.B. eine Rille oder ein Vorsprung) interagieren und die korrekte Einfuhr des Dentalanalogs entlang der Einschubachse gewährleisten.

Der Einbauabschnitt und der Interfaceabschnitt können einteilig ausgebildet sein.

In einer Ausführungsvariante ist vorgesehen, dass der Einbauabschnitt und der Interfaceabschnitt über eine Verbindung miteinander lösbar verbunden sind. Dadurch können unterschiedliche Interfaceabschnitte -je nach verwendetem Hersteller - verwendet werden. Ein solcher zweiteiliger (oder mehrteiliger) Aufbau des Dentalanalogs erlaubt außerdem - je nach Einbausituation und Geometrie - die Anbringung unterschiedlicher Abutments oder unbearbeiteter Zahnkronen. Gegebenenfalls kann der Einbauabschnitt vom Interfaceabschnitt gelöst vorliegen und nur der Einbauabschnitt zuerst eingesetzt werden. Anschließend kann der Interfaceabschnitt montiert werden, um das Dentalanalog fertigzustellen.

Die lösbare Verbindung zwischen Einbauabschnitt und Interfaceabschnitt kann auf verschiedene Arten gebildet werden. Bevorzugt ist die lösbare Verbindung formschlüssig ausgebildet. Mittels Formschluss kann der korrekte Sitz von Interfaceabschnitt zu Einbauabschnitt gesichert werden.

Die lösbare Verbindung zwischen Einbauabschnitt und Interfaceabschnitt kann aber auch kraftschlüssig ausgebildet sein und natürlich kann sie form- und kraftschlüssig ausgebildet werden, um maximale Stabilität zu erzielen.

Der Interfaceabschnitt umfasst in der Regel entweder eine Halterung für ein Abutment oder für einen Zahnersatz. Meist ist auch der Interfaceabschnitt zu einem Großteil in das 3D-Modell eingesetzt und es ragt nur ein sehr kleiner Teil aus dem 3D-Modell hervor.

Üblicherweise dient das Dentalanalog als Schnittstelle zum Abutment (oder Dentalabutment), das als Verbindungselement zwischen dem Implantatkörper, der fest im Kieferknochen verwachsen ist, und dem eigentlichen Zahnersatz, der oben auf dem Implantat befestigt wird.

Gelegentlich wird die Zahnkrone aber auch ohne Abutment direkt auf das Implantat aufgebracht.

Die Erfindung betrifft außerdem ein Verfahren zur Herstellung eines Zahnersatzes für ein Gebiss, gekennzeichnet durch die Schritte:
(i) Erstellen eines 3D-Modells des Gebisses,
(ii) Einbringen einer Öffnung im 3D-Modell in jenem Bereich, in dem im Gebiss ein Implantat für den Zahnersatz vorgesehen ist,
(iii) Einbringen des Einbauabschnitts eines Dentalanalogs der o.g. Art in die Öffnung und Arretieren des Dentalanalogs durch Betätigen des Arretierelements,
(iv) Einsetzen einer unbearbeiteten Zahnkrone in den Interfaceabschnitt, wobei gegebenenfalls vorher ein Abutment zwischen Interfaceabschnitt und unbearbeiteten Zahnkrone eingesetzt wird,
(v) Modellieren der unbearbeiteten Zahnkrone zum gewünschten Zahnersatz und
(vi) Entnehmen des fertigen Zahnersatzes.

Das 3D-Modells des Gebisses kann über Abdruck und anschließendem Guss oder über Dentalscan und 3D-Druck oder 3D-Fräsen hergestellt werden.

### DETAILLIERTE BESCHREIBUNG DER ERFINDUNG

Weitere Vorteile und Details der Erfindung werden anhand der Figuren und Figurenbeschreibung erläutert.
- Fig. 1: zeigt ein Dentalanalog gemäß der Erfindung im Schrägriss.
- Fig. 2a, 2b, 2c: zeigen das Dentalanalog von Fig. 1 in Draufsicht (Fig. 2a) und in zwei Schnittansichten entlang der Achsen A-A (Fig. 2b) und B-B (Fig. 2c).
- Fig. 3a, 3b: zeigen das Dentalanalog von Fig. 1 einer Explosionsdarstellung (Fig. 3a) samt einer Schnittdarstellung (Fig. 3b) der Explosionsdarstellung entlang der Achse A-A.
- Fig. 4a, 4b: zeigen das Dentalanalog von Fig. 1 mit eingeschwenkten Spreizelementen (Fig. 4a) und im arretierten Zustand mit ausgeschwenkten Spreizelementen (Fig. 4b).
- Fig. 5a, 5b: zeigen das Dentalanalog von Fig. 1 in einem 3D-Modell (schematisch) eingebracht (Fig. 5a) sowie einen Querschnitt des Arretierabschnitts (Fig. 5b).

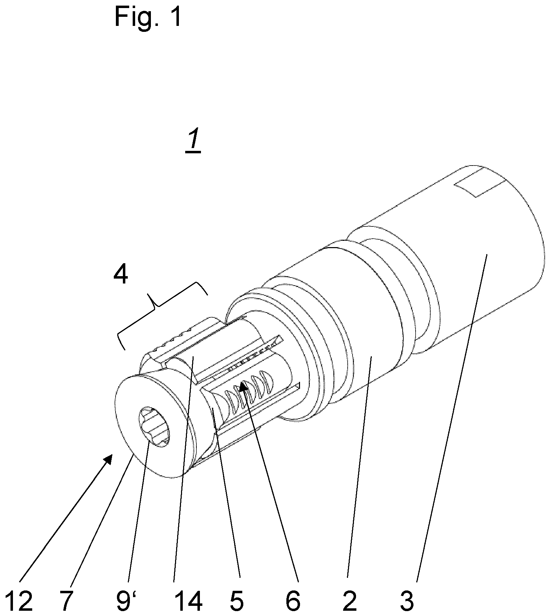

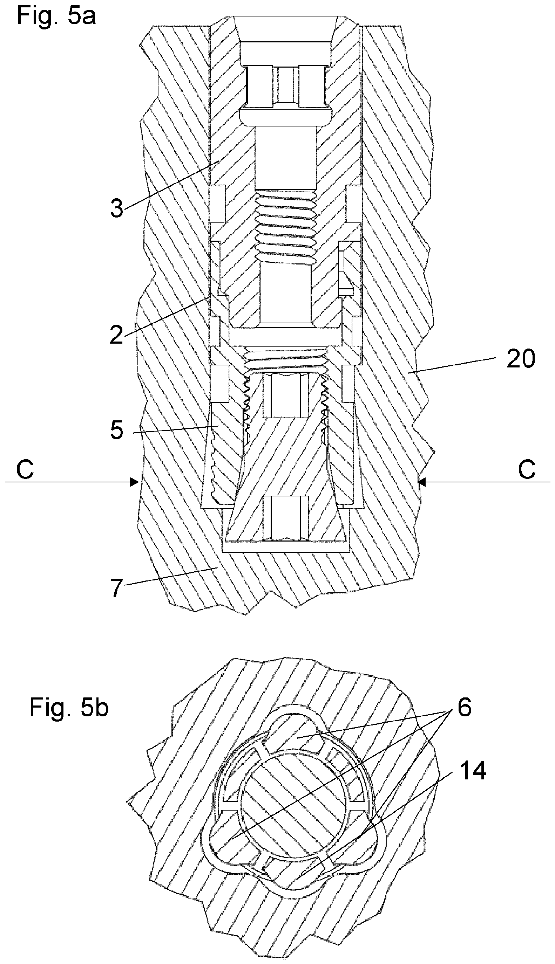

In Fig. 1 ist ein erfindungsgemäßes Dentalanalog 1 im Schrägriss gezeigt. Das Dentalanalog 1 umfasst einen Einbauabschnitt 2 und einen dem Einbauabschnitt 2 gegenüberliegenden Interfaceabschnitt 3. Der Einbauabschnitt 2 dient dazu, dass das Dentalanalog 1 in ein 3D-Modell eingesetzt werden kann (siehe auch Fig. 5a, 5b). Hierfür ist der Endabschnitt 12 vorgesehen, der in eine Öffnung im 3D-Modell eingeführt wird.

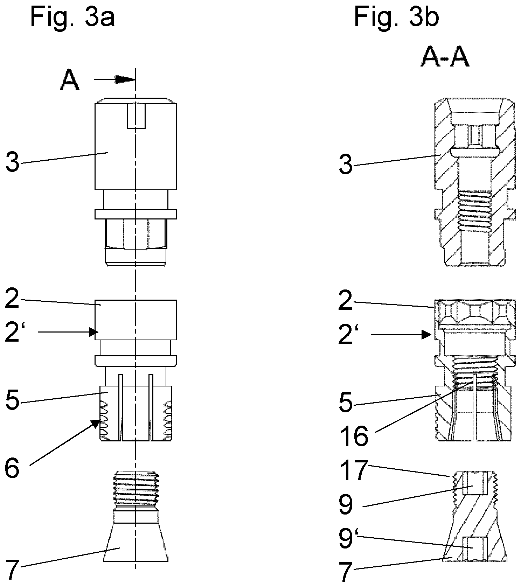

Der Einbauabschnitt 2 weist im gezeigten Ausführungsbeispiel einen Arretierabschnitt 4 auf, der in eine passende Öffnung in einem 3D-Modell eingesetzt werden kann. Das Dentalanalog 1 ist im gezeigten Ausführungsbeispiel mehrteilig ausgebildet, wobei der Einbauabschnitt 2 und der Interfaceabschnitt 3 eine lösbare Verbindung aufweisen, die weiter unten zu Fig. 3a und 3b näher erläutert wird.

Der Arretierabschnitt 4 des Einbauabschnitts 2 weist mehrere Spreizelemente 5 auf. Auf den Spreizelementen 5 sind zusätzlich Noppen 6 aufgebracht, welche den Halt (Rutschfestigkeit) des Dentalanalogs 1 im 3D-Modell verbessern. Die Spreizelemente 5 sind im gezeigten Ausführungsbeispiel eingeschwenkt. Dabei weist der Arretierabschnitt 4 in diesem Zustand mit eingeschwenkten Spreizelementen 5 etwa Zylinderform auf.

Weiters ist ein Arretierelement 7 vorgesehen ist, mit welchem die Spreizelemente 5 aus dem Arretierabschnitt 4 ausgeschwenkt werden können, um den Einbauabschnitt 2 im 3D-Modell zu verankern. Zum späteren Entfernen des Einbauabschnitts 2 bzw. des Dentalanalogs 1 aus dem 3D-Modells werden die Spreizelemente 5 wieder eingeschwenkt. Hierfür umfasst das Arretierelement 6 Formelemente 9, 9`, die mit einem Werkzeug betätigbar sind.

Das im Fig. 1 gezeigte Formelement 9` ist als Innensechsrund ausgebildet und kann in axialer Richtung von der Seite des Endabschnitts 12 aus betätigt werden. Hierfür kann z.B. ein Schraubenzieher mit einer entsprechenden Außensechsrundspitze in das Formelemente 9` eingreifen. Das Formelement 9 kann natürlich anderen Formen, wie z.B. ein Innensechskant etc. sein, sodass das Werkzeug die komplementäre Form (z.B. Außensechskantspitze) aufweisen muss.

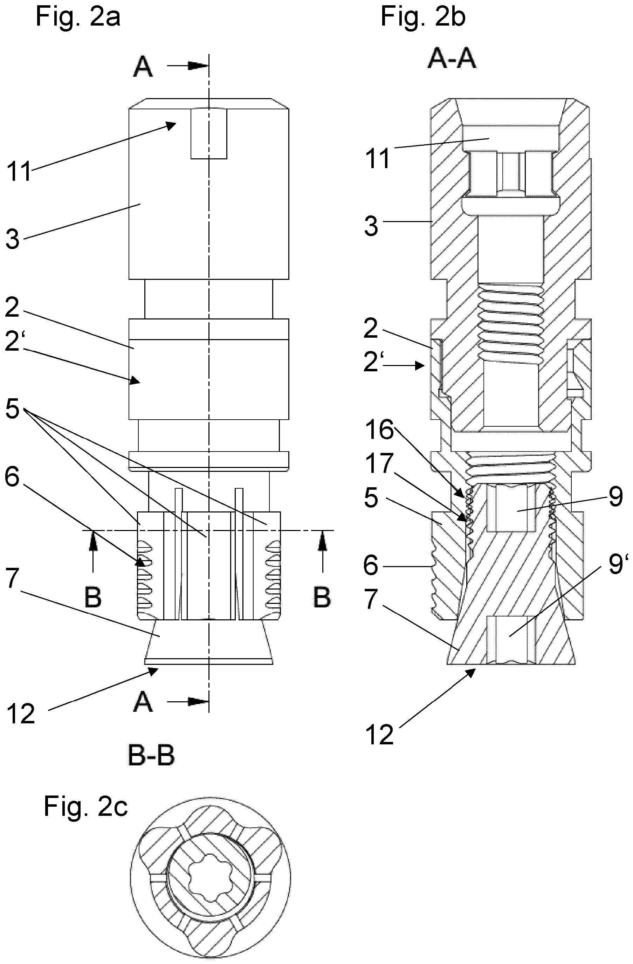

Mit den Ansichten der Fig. 2a und 2b kann die Funktionsweise des Arretierelements 7 genauer erläutert werden. Das Arretierelement 7 weist einen Schraubabschnitt 17 in Form eines Außengewindes am Arretierelement 7 auf. Der Schraubabschnitt 17 ist auf der Außenfläche oberhalb eines kegelstumpfförmigen bzw. keilförmigen Abschnitts des Arretierelements 7 angeordnet. Ein korrespondierender Gewindeabschnitt 16 in Form eines Innengewindes ist an der Innenseite des Einbauabschnitts 2 angeordnet. Durch die Bewegung des Arretierelements 7 nach oben kann der keilförmige Abschnitt des Arretierelements 7 in axialer Richtung A des Dentalanalogs 1 relativ zum Einbauabschnitt 2 bewegt werden.

Das Arretierelement 7 weist neben dem bereits zu Fig. 1 erläuterten Formelements 9` noch ein weiteres Formelement 9 auf, welches in axialer Richtung von der Seite des Interfaceabschnitts 2 betätigbar ist. Die Funktionsweise bei beiden Formelementen 9, 9` ist identisch. Es müssen nicht zwei Formelemente 9, 9` vorgesehen sein, es kann auch nur eines vorhanden bzw. zugänglich sein.

Durch ein Werkzeug (z.B. einen Schraubendreher mit komplementärer Form zu den Formelementen 9, 9`) agiert das Arretierelement 7 wie eine Spannschraube in einem Spanndorn. Durch diese Relativbewegung des Arretierelements 7 über Schraubabschnitt 17 und den korrespondierenden Gewindeabschnitt 16 werden die Spreizelemente 5 nach Art eines Spanndorns nach außen bewegt.

Die Spreizelemente 5 sind entlang der Längsachse des Einbauabschnitts 2 radial ausschwenkbar. Dabei bilden die Spreizelemente 5 im ausgeschwenkten Zustand etwa einen Kegelstumpf. Die Deckfläche des Kegelstumpfs ist dabei näher zum Interfaceabschnitt 3 als die Grundfläche des Kegelstumpfs.

Zwischen Einbauabschnitt 2 und Interfaceabschnitt 3 ist eine form- und kraftschlüssige Verbindung vorgesehen, um den Interfaceabschnitt 3 mit dem bereits fest verankerten Einbauabschnitt 2 stabil zu verbinden. Somit kann die Passgenauigkeit der finalen Versorgung mit Implantataufbauten am Modell überprüft werden. Zur Unterscheidung der verschiedenen Durchmesser sind die Analoge auch unterschiedlich eingefärbt erhältlich.

Der Interfaceabschnitt 3 kann - wie in gezeigten Beispiel - eine Verbindungsstelle 11 für ein Abutment (nicht gezeigt) aufweisen. Das Abutment kann durch einen Drehverschluss aufgebracht werden.

Zumindest im Bereich 2` des größten Durchmessers des Einbauabschnitt 2 ist der Einbauabschnitt 2 zylinderförmig (hier kreiszylinderförmig) ausgebildet.

In den Fig. 3a und 3b ist die zu den Fig. 2a und 2b erläuterte Funktionsweise des Arretierelements 7 noch klarer erkennbar. Das Arretierelement 7 ist über den Schraubabschnitt 17 in das korrespondierender Gewindeabschnitt 16 eingeschraubt. Weiters ist die Mehrteiligkeit des Dentalanalogs 1 verdeutlicht, bei dem der Interfaceabschnitt 3 mit dem Einbauabschnitt 2 über eine kraftschlüssige Verbindung gekuppelt ist. Im Interfaceabschnitt 3 ist die Verbindungsstelle 11 für ein Abutment erkennbar.

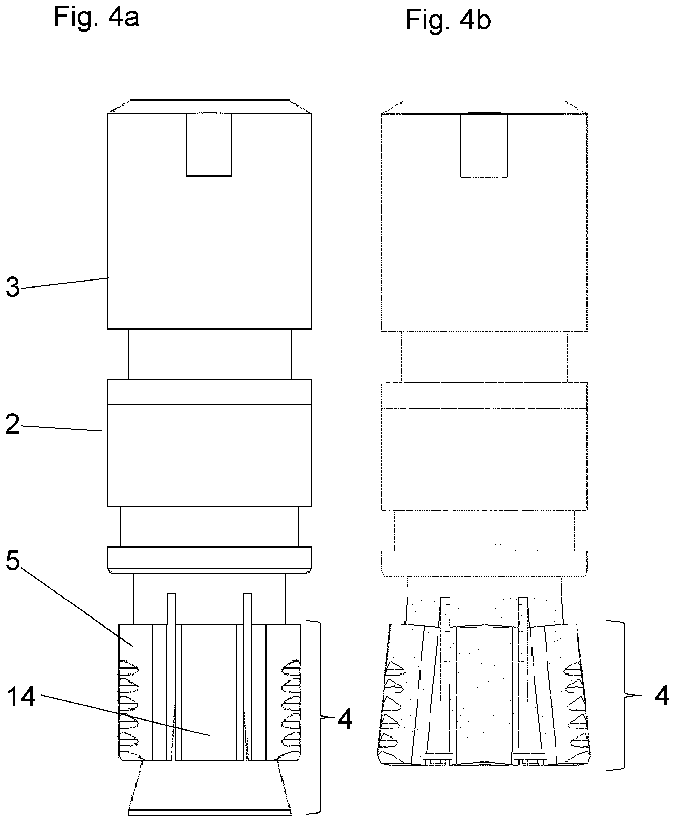

Die Fig. 4a und 4b zeigen das Dentalanalog 1 in nicht arretierten (Fig. 4a) und arretierten (Fig. 4b) Zustand. Beim Arretieren wird durch Bewegung des Arretierelements 7 relativ zum Dentalanalog 1 das Arretierelement unter die Spreizelemente 5 bewegt. Durch den keilförmigen Abschnitt werden die Spreizelemente 5 nach außen gedrückt.

Die Fig. 5a und 5b zeigen das in ein 3D-Modell eingeschobene Dentalanalog 1, wobei der das Dentalanalog 1 umgebende Bereich 20 des 3D-Modells ebenfalls dargestellt ist. Es ist erkennbar, dass der Interfaceabschnitt 3 ebenfalls zu einem Großteil in das 3D-Modell eingesetzt ist und nur ein sehr kleiner Teil des Dentalanalogs 1 aus dem 3D-Modell hervorragt.

Die Schnittdarstellung der Fig. 5b zeigt außerdem die Indexierung 14, die in eine korrespondierende Rille 21 im das Dentalanalog 1 umgebende Bereich 20 eingreift. Es sind insgesamt drei Spreizelemente 5 gezeigt und zwischen zwei Spreizelementen 5 ist der Index 14 in Form eines Vorsprungs erkennbar.

Das Arretierelement 7 weist neben dem bereits zu Fig. 1 erläuterten Formelements 9` noch ein weiteres Formelement 9 auf, welches in axialer Richtung von der Seite des Interfaceabschnitts 2 betätigbar ist. Die Funktionsweise bei beiden Formelementen 9, 9` ist identisch. Es müssen nicht zwei Formelemente 9, 9` vorgesehen sein, es kann auch nur eines vorhanden bzw. zugänglich sein.

Durch ein Werkzeug (z.B. einen Schraubendreher mit komplementärer Form zu den Formelementen 9, 9`) agiert das Arretierelement 7 wie eine Spannschraube in einem Spanndorn. Durch diese Relativbewegung des Arretierelements 7 über Schraubabschnitt 17 und den korrespondierenden Gewindeabschnitt 16 werden die Spreizelemente 5 nach Art eines Spanndorns nach außen bewegt.

Die Spreizelemente 5 sind entlang der Längsachse A des Einbauabschnitts 2 radial ausschwenkbar. Dabei bilden die Spreizelemente 5 im ausgeschwenkten Zustand etwa einen **Kegelstumpf.** Die Deckfläche des Kegelstumpfs ist dabei näher zum Interfaceabschnitt 3 als die Grundfläche des Kegelstumpfs.

Zwischen Einbauabschnitt 2 und Interfaceabschnitt 3 ist eine form- und kraftschlüssige Verbindung vorgesehen, um den Interfaceabschnitt 3 mit dem bereits fest verankerten Einbauabschnitt 2 stabil zu verbinden. Somit kann die Passgenauigkeit der finalen Versorgung mit Implantataufbauten am Modell überprüft werden. Zur Unterscheidung der verschiedenen Durchmesser sind die Analoge auch unterschiedlich eingefärbt erhältlich.

Der Interfaceabschnitt 3 kann - wie in gezeigten Beispiel - eine Verbindungsstelle 11 für ein Abutment (nicht gezeigt) aufweisen. Das Abutment kann durch einen Drehverschluss aufgebracht werden.

## Patentansprüche

1. Dentalanalog (1) umfassend
einen Einbauabschnitt (2) und einen dem Einbauabschnitt (2) gegenüberliegenden Interfaceabschnitt (3),
wobei der Einbauabschnitt (2) einen Endabschnitt (12) zum Einführen des Dentalanalogs in eine Ausnehmung eines 3D-Modells aufweist,
**dadurch gekennzeichnet, dass**
der Einbauabschnitt (2) einen Arretierabschnitt (4) mit Spreizelementen (5) aufweist,
wobei ein Arretierelement (7, 7') vorgesehen ist, mit welchem die Spreizelemente (5) aus dem Arretierabschnitt (4) ausschwenkbar und in den Arretierabschnitt (4) einschwenkbar sind.

2. Dentalanalog nach Anspruch 1, **dadurch gekennzeichnet, dass** der Einbauabschnitt (2) zumindest im Bereich (2`) des größten Durchmessers des Einbauabschnitt (2) zylinderförmig, vorzugsweise kreiszylinderförmig, ausgebildet ist.

3. Dentalanalog nach Anspruch 1 oder Anspruch 2, **dadurch gekennzeichnet, dass** der Arretierabschnitt (7, 7') im Zustand mit eingeschwenkten Spreizelementen (5) zylinderförmig ausgebildet ist.

4. Dentalanalog nach einem der Ansprüche 1 bis 3, **dadurch gekennzeichnet, dass** das Arretierelement (7) in axialer Richtung von der Seite des Interfaceabschnitts (3) über ein Formelement (9) betätigbar ist.

5. Dentalanalog nach einem der Ansprüche 1 bis 4, **dadurch gekennzeichnet, dass** das Arretierelement (7) in axialer Richtung von dem Interfaceabschnitt (3) gegenüberliegenden Seite über ein Formelement (9`) betätigbar ist.

6. Dentalanalog nach einem der Ansprüche 1 bis 5, **dadurch gekennzeichnet, dass** das Arretierelement (7) einen Schraubabschnitt (17) und der Einbauabschnitt (2) einen dem Schraubabschnitt (17) entsprechenden Gewindeabschnitt (16) umfasst, wobei das Arretierelement (6) durch Betätigen des Arretierelements (9`) in axialer Richtung des Dentalanalogs (1) relativ zum Einbauabschnitt (2) bewegbar ist.

7. Dentalanalog nach einem der Ansprüche 1 bis 6, **dadurch gekennzeichnet, dass** die Spreizelemente (5) entlang der Längsachse des Einbauabschnitts (3) radial ausschwenkbar sind.

8. Dentalanalog nach einem der Ansprüche 1 bis 7, **dadurch gekennzeichnet, dass** die Spreizelemente (5) im ausgeschwenkten Zustand etwa einen Kegelstumpf bilden, wobei die Deckfläche des Kegelstumpfs näher zum freistehenden Abschnitt als Grundfläche des Kegelstumpfs angeordnet ist.

9. Dentalanalog nach einem der Ansprüche 1 bis 8, **dadurch gekennzeichnet, dass** der Einbauabschnitt (3) und der Interfaceabschnitt (2) über eine vorzugsweise lösbare Verbindung miteinander verbunden sind.

10. Dentalanalog nach Anspruch 9, **dadurch gekennzeichnet, dass** die lösbare Verbindung zwischen Einbauabschnitt (2) und Interfaceabschnitt (2) sowohl formschlüssig ausgebildet ist.

11. Dentalanalog nach Anspruch 9 oder Anspruch 10, **dadurch gekennzeichnet, dass** die lösbare Verbindung zwischen Einbauabschnitt (3) und gegenüberliegendem Abschnitt (2) kraftschlüssig ausgebildet ist.

12. Dentalanalog nach einem der Ansprüche 1 bis 10, **dadurch gekennzeichnet, dass** der Interfaceabschnitt (3) eine Verbindungstelle (11) für ein Abutment oder eine Zahnkrone aufweist.

13. Dentalanalog nach einem der Ansprüche 1 bis 12, **dadurch gekennzeichnet, dass** der Einbauabschnitt (2) einen oder mehrere Indexe (14) aufweist.

14. Verfahren zur Herstellung eines Zahnersatzes für ein Gebiss, **gekennzeichnet durch** die Schritte:
(i) Erstellen eines 3D-Modells des Gebisses,
(ii) Einbringen einer Öffnung im 3D-Modell in jenem Bereich, in dem im Gebiss ein Implantat für den Zahnersatz vorgesehen ist,
(iii) Einbringen des Einbauabschnitts eines Dentalanalogs nach einem der Ansprüche 1 bis 13 in die Öffnung und Arretieren des Dentalanalogs durch Betätigen des Arretierelements,
(iv) Einsetzen einer unbearbeiteten Zahnkrone in den Interfaceabschnitt, wobei gegebenenfalls vorher ein Abutment zwischen Interfaceabschnitt und unbearbeiteten Zahnkrone eingesetzt wird,
(v) Modellieren der unbearbeiteten Zahnkrone zum gewünschten Zahnersatz und
(vi) Entnehmen des fertigen Zahnersatzes.

15. Verwendung eines Dentalanalogs nach einem der Ansprüche 1 bis 13 in einem 3D-Modell eines Gebisses.
